(19) Europäisches Patentamt
European Patent Office
Office européen des brevets

(11) EP 1 003 810 B1

(12) EUROPÄISCHE PATENTSCHRIFT

(45) Veröffentlichungstag und Bekanntmachung des Hinweises auf die Patenterteilung:
**15.06.2005 Patentblatt 2005/24**

(21) Anmeldenummer: **98942652.3**

(22) Anmeldetag: **29.07.1998**

(51) Int Cl.7: **C08K 13/02**, C08L 69/00 // (C08K13/02, 5:51, 3:00)

(86) Internationale Anmeldenummer:
**PCT/EP1998/004734**

(87) Internationale Veröffentlichungsnummer:
**WO 1999/007782 (18.02.1999 Gazette 1999/07)**

# (54) FLAMMWIDRIGE, SPANNUNGSRISSBESTÄNDIGE POLYCARBONAT ABS-FORMMASSEN

ABS MOULDABLE MATERIALS CONTAINING POLYCARBONATE, NON-FLAMMABLE AND RESISTANT TO STRESS CRACK

MATIERES MOULABLES EN ABS CONTENANT DU POLYCARBONATE, QUI SONT ININFLAMMABLES ET RESISTENT AU FENDILLEMENT PAR CONTRAINTE

(84) Benannte Vertragsstaaten:
**BE CH DE DK ES FR GB IT LI NL**

(30) Priorität: **11.08.1997 DE 19734661**

(43) Veröffentlichungstag der Anmeldung:
**31.05.2000 Patentblatt 2000/22**

(73) Patentinhaber: **Bayer MaterialScience AG**
**51368 Leverkusen (DE)**

(72) Erfinder:
- **ECKEL, Thomas**
  **D-41540 Dormagen (DE)**
- **WITTMANN, Dieter**
  **D-51375 Leverkusen (DE)**
- **ZOBEL, Michael**
  **D-40547 Düsseldorf (DE)**
- **KELLER, Bernd**
  **D-47608 Geldern (DE)**
- **ALBERTS, Heinrich**
  **D-51519 Odenthal (DE)**

(56) Entgegenhaltungen:
**EP-A- 0 640 655**
**EP-A- 0 754 531**
**EP-A- 0 761 746**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft flammwidrige Polycarbonat-ABS-Formmassen, enthaltend Phosphat-Verbindungen und anorganische Materialien, die eine ausgezeichnete Spannungsrißbeständigkeit haben.

EP-A 0 174 493 (US-P 4 983 658) beschreibt flammgeschützte, halogenhaltige Polymermischungen aus aromatischem Polycarbonat, styrolhaltigem Pfropfcopolymer, Monophosphaten und einer speziellen Polytetrafluorethylen-Formulierung. Im Brandverhalten und mechanischen Werte-Niveau sind diese Mischungen zwar ausreichend, allerdings können Defizite bei der Spanungsrißbeständigkeit auftreten.

In US-P 5 030 675 werden flammwidrige, thermoplastische Formmassen aus aromatischem Polycarbonat, ABS-Polymerisat, Polyalkylenterephthalat sowie Monophosphaten und fluorierten Polyolefinen als Flammschutzadditive beschrieben. Der guten Spannungsrißbeständigkeit stehen als Nachteile Defizite bei der Kerbschlagzähigkeit sowie ungenügende Themostabilität bei hoher thermischer Belastung wie z.B. dem Verarbeitungsprozeß gegenüber.

Disphosphate sind als Flammschutzadditive bekannt. In JA 59 202 240 wird die Herstellung eines solchen Produktes aus Phosphorovichlorid, Diphenolen wie Hydrochinon oder Bisphenol A und Monophenolen wie Phenol oder Kresol beschrieben. Diese Diphosphate können in Polyamid oder Polycarbonat als Flammschutzmittel eingesetzt werden In dieser Literaturstelle findet sich jedoch kein Hinweis auf eine verbesserte Spannungsrißbeständigkeit durch Zusatz des oligomeren Phosphats zu Polycarbonat-Formmassen.

In EP-A 0 363 608 (= US-P 5 204 394) werden Polymermischungen aus aromatischem Polycarbonat, styrolhaltigem Copolymer oder Pfropfcopolymer sowie oligomeren Phosphaten als Flammschutzadditive beschrieben. In US-P 5 061 745 werden-Polymermischungen aus aromatischem Polycarbonat, ABS-Pfropfpolymerisat und/oder styrolhaltigem Copolymer und Monophosphaten als Flammschutzadditive beschrieben. Zur Herstellung dünnwandiger Gehäuseteile ist das Niveau der Spannungsrißbeständigkeit dieser Mischungen oft nicht ausreichend.

In EP-A 0 767 204 werden flammwidrige Polyphenylenoxid- (PPO)- bzw. Polycarbonat-Mischungen beschrieben, die eine Mischung aus Oligophosphaten (Typ Bisphenol A (BPA)-Oligophosphat) und Monophosphaten als Flammschutzmittel enthalten. Hohe Gehalte an Flammschutzmittel führen zu nachteiligen mechanischen Eigenschaften und reduzierter Wärmeformbeständigkeit.

EP-A 0 611 798 und WO 96/27600 beschreiben Formmassen, die neben Polycarbonat oligomere, endständig alkylierte Phosphorsäureester vom BPA-Typ enthalten. Aufgrund der Allcylierung sind zur Erzielung eines wirksamen Flammschutzs hohe Anteile notwendig, was für viele anwendungstechnische Eigenschaften sehr nachteilig ist.

In EP-A 0 754 531 werden verstärkte PC/ABS-Formmassen beschrieben, die für Präzisionsteile geeignet sind Als Flammschutzmittel werden unter anderem auch Oligophosphate des BPA-Typs verwendet. Die hohen Füllstoffanteile wirken sich sehr nachteilig auf die mechanischen Eigenschaften aus.

Überraschenderweise wurde nun gefunden, daß flammwidrige Polycarbonat-ABS-Formmassen eine ausgezeichnete Spannungsrißbeständigkeit und Kerbschlagzähigkeit sowie eine hohe Wärmeformbeständigkeit haben, wenn sie eine Additiv-Kombination aus einer speziellen Phosphorverbindung sowie einer synergistisch wirkenden Menge eines oder mehrerer anorganischer Materialien enthalten. Eine besonders günstige Eigenschaftskombination wird erreicht, wenn sich die Phosphorverbindung aus Bisphenol A-Einheiten aufbaut. Diese Formmassen eignen sich insbesondere zur Herstellung dünnwandiger Formteile (Datentechnik-Gehäuseteile), wo hohe Verarbeitungstemperaturen und Drücke zu einer erheblichen Belastung des eingesetzten Materials führen.

Gegenstand der Erfindung sind flammwidrige, thermoplastische Formmassen enthaltend

A. 40 bis 98 Gew.-Teifen, vorzugsweise 50 bis 95 Gew.-Teilen, besonders bevorzugt 60 bis 90 Gew.-Teilen eines aromatischen Polycarbonats,

B 0 bis 50, vorzugsweise 1 bis 30 Gew.-Teile, eines Vinyl-(Co)-polymerisats Bevorzugt aus wenigstens einem Monomeren ausgewählt aus der Reihe Styrol, α-Methylstyrol, kernsubstituierten Styrolen, $C_1$-$C_8$-Alkylmethacrylaten, $C_1$-$C_8$-Alkylacrylaten mit wenigstens einem Monomeren aus der Reihe Acrylnitril, Methacrylnitril, $C_1$-$C_8$-Alkylmethacrylaten, $C_1$-$C_8$-Alkylacrylaten. Maleinsäureanhydrid. N-substituierten Maleinimiden,

C. 0,5 bis 60 Gew.-Teilen, vorzugsweise 1 bis 40 Gew.-Teilen, besonders bevorzugt 2 bis 30 Gew.-Teilen eines Pfropfpolymerisats,

D. 0,5 bis 20 Gew.-Teilen, bevorzugt 1 bis 18 Gew.-Teilen, besonders bevorzugt 2 bis 15 Gew.-Teilen einer Phosphorverbindung der Formel (I)

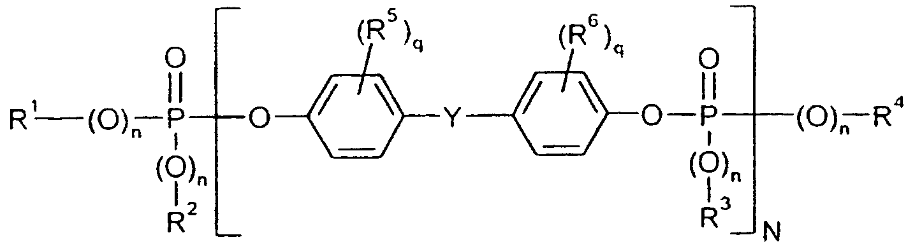 (I) .

worin

| | |
|---|---|
| $R^1$, $R^2$, $R^3$ und $R^4$, | unabhängig voneinander gegebenenfalls durch Halogen substituiertes $C_1$-$C_8$-Alkyl, jeweils gegebenenfalls durch Halogen und/oder Alkyl substituiertes $C_5$-$C_6$-Cycloalkyl, $C_6$-$C_{10}$-Aryl oder $C_7$-$C_{12}$-Aralkyl, |
| n | unabhängig voneinander 0 oder 1, |
| q | unabhängig voneinander 0, 1, 2, 3 oder 4, |
| N | 0, 1 bis 5 und |
| $R^5$ und $R^6$ | unabhängig voneinander $C_1$-$C_4$-Alkyl, vorzugsweise Methyl oder Halogen, vorzugsweise Chlor und/oder Brom bedeuten, |
| Y | $C_1$-$C_7$-Alkyliden, $C_1$-$C_7$-Alkylen, $C_5$-$C_{12}$-Cycloalkylen, $C_5$-$C_{12}$-Cycloalkyliden, -O-, -S-. -SO-, -$SO_2$- oder -CO- bedeutet, |

E. 0,05 bis 5 Gew.-Teilen, vorzugsweise 0,1 bis 1 Gew.-Teil, besonders bevorzugt 0,1 bis 0,5 Gew.-Teilen eines fluorierten Polyolefins,

F. 0,01 bis 50 Gew.-Teile, vorzugsweise 0,1 bis 20 Gew.-Teile, besonders bevorzugt 0,5 bis 10 Gew.-Teile feinstteiliges anorganisches Pulver mit einem mittleren Teilchendurchmesser ≤200 nm, wobei Komponent F aus Verbindungen eines oder mehrerer Metalle der 1. bis 5. Hauptgruppe oder 1. bis 8. Nebengruppe des Periodensytems mit wenigtens einem Element ausgewählt aus der Gruppe bestehend aus Sauerstoff, Schwefel, Bor, Kohlenstoff, Phosphor, Stickstoff, Wasserstoff und Silicium besteht, und die Summe aller Gewichtsteile A + B + C + D + E + F 100 ergibt.

**Komponente A**

Erfindungsgemäß geeignete, thermoplastische, aromatische Polycarbonate gemäß Komponente A sind solche auf Basis der Diphenole der Formel (II)

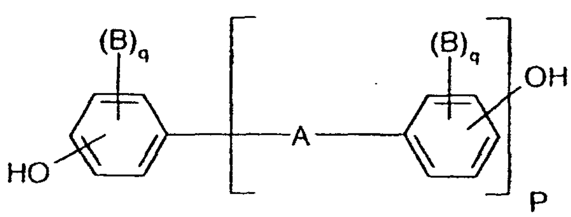 (II)

A eine Einfachbindung $C_1$-$C_5$-Alkylen, $C_2$-$C_5$-Alkyliden, $C_5$-$C_6$-Cycloalkyliden, -S- oder -$SO_2$-,

B Chlor, Brom,

q 0, 1 oder 2 und

p 1 oder 0 sind,

oder alkylsubstituierte Dihydroxyphenylcycloalkane der Formel (III),

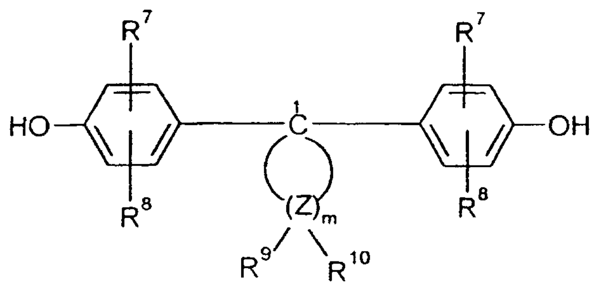

(III)

worin

$R^7$ und $R^8$ unabhängig voneinander, jeweils Wasserstoff, Halogen, bevorzugt Chlor oder Brom, $C_1$-$C_8$-Alkyl, $C_5$-$C_6$-Cycloalkyl, $C_6$-$C_{10}$-Aryl, bevorzugt Phenyl, und $C_7$-$C_{12}$-Aralkyl, bevorzugt Phenyl-$C_1$-$C_4$-Alkyl, insbesondere Benzyl,

m eine ganze Zahl von 4, 5, 6 oder 7, bevorzugt 4 oder 5,

$R^9$ und $R^{10}$ für jedes Z individuell wählbar, unabhängig voneinander Wasserstoff oder $C_1$-$C_6$-Alkyl,

und

Z Kohlenstoff bedeutet, mit der Maßgabe, daß an mindestens einem Atom Z $R^9$ und $R^{10}$ gleichzeitig Alkyl bedeuten.

Geeignete Diphenole der Formel (II) sind z.B. Hydrochinon, Resorcin, 4,4'-Dihydroxydiphenyl, 2,2-Bis-( 4-hydroxyphenyl)-propan, 2,4-Bis-(4-hydroxyphenyl)-2-methylbutan, 1,1-Bis-(4-hydroxyphenyl)-cyclohexan, 2,2-Bis-(3-chlor-4-hydroxy-phenyl)-propan, 2,2-Bis-(3,5-dibrom-4-hydroxyphenyl)-propan.

Bevorzugte Diphenole der Formel (II) sind 2,2-Bis-(4-hydroxyphenyl)-propan. 2,2-Bis-(3,5-dichlor-4-hydroxyphenyl)-propan und 1,1-Bis-(4-hydroxyphenyl)-cyclohexan.

Bevorzugte Diphenole der Formel (III) sind 1,1-Bis-(4-hydroxyphenyl)-3,3-dimethylcyclohexan, 1,1-Bis-(4-hydroxyphenyl)-3,3,5-trimethylcyclohexan und 1,1-Bis-(4-hydroxyphenyl)-2,4,4-trimethyl-cyclopentan.

Erfindungsgemäß geeignete Polycarbonate sind sowohl Homopolycarbonate als auch Copolycarbonate.

Komponente A kann auch eine Mischung der vorstehend definierten thermoplastischen Polycarbonate sein.

Polycarbonate können in bekannter Weise aus Diphenolen mit Phosgen nach den Phasengrenzflächenverfahren oder mit Phosgen nach dem Verfahren in homogener Phase, dem sogenannten Pyridinverfahren, hergestellt werden, wobei das Molekulargewicht in bekannter Weise durch eine entsprechende Menge an bekannten Kettenabbrechern eingestellt werden kann.

Geeignete Kettenabbrecher sind z.B. Phenol, p-Chlorphenol, p-tert.-Butylphenol oder - 2,4,6-Tribromphenol, aber auch langkettige Alkylphenole, wie 4-(1,3-Tetramethylbutyl)-phenol gemäß DE-OS 2 842 005 oder Monoalkylphenol bzw. Dialkylphenol mit insgesamt 8 bis 20 C-Atomen in den Alkylsubstituenten gemäß deutscher Patentanmeldung P 3 506 472.2 wie 3,5-di-tert.-Butylphenol, p-iso-Octylphenol, p-tert.-Octylphenol, p-Dodecylphenol und 2-(3,5-Dimethyl-heptyl)-phenol und 4-(3,5-Dimethyl-heptyl)-phenol.

Die Menge an Kettenabbrechern beträgt im allgemeinen zwischen 0,5 und 10 Mol-%, bezogen auf die Summe der jeweils eingesetzten Diphenole der Formeln (11) und/oder (III).

Die erfindungsgemäß geeigneten Polycarbonate A haben mittlere Molekulargewichte ($\overline{M}_w$), Gewichtsmittel, gemessen z.B. durch Ultrazentrifugation oder Streulichtmessung) von 10 000 bis 200 000, vorzugsweise 20 000 bis 80 000.

Die erfindungsgemäß geeigneten Polycarbonate A können in bekannter Weise verzweigt sein, und zwar vorzugsweise durch den Einbau von 0,05 bis 2 Mol-%, bezogen auf die Summe der eingesetzten Diphenole, an drei- oder mehr als dreifunktionellen Verbindungen, z.B. solchen mit drei oder mehr als drei phenolischen Gruppen.

Bevorzugte Polycarbonate sind neben dem Bisphenol-A-Homopolycarbonat die Copolycarbonate von Bisphenol A mit bis zu 15 Mol-%, bezogen auf die Mol-Summen an Diphenolen, an 2,2-Bis-(3,5-dibrom-4-hydroxyphenyl)-propan und die Copolycarbonate von Bisphenol A mit bis zu 60 Mol-%. bezogen auf die Mol-Summen an Diphenolen, 1,1-Bis-(4-hydroxyphenyl)-3,3,5-trimethylcyclohexan.

Die Polycarbonate A können teilweise oder vollständig durch aromatische Polyestercarbonate ersetzt werden. Die aromatischen Polycarbonate der Komponente A können auch Polysiloxan-Blöcke enthalten. Deren Herstellung wird beispielsweise in der DE-OS 3 334 872 und in der US-PS 3 821 325 beschrieben.

**Komponente B**

Erfindungsgemäß einsetzbare Vinyl-(Co)polymerisate gemäß Komponente B sind solche aus wenigstens einem Monomeren aus der Reihe: Styrol, α-Methylstyrol und/oder kernsubstituierten Styrolen, $C_1$-$C_8$-Alkylmethacrylat, $C_1$-$C_8$-Alkylacrylat (B.1) mit wenigstens einem Monomeren aus der Reihe: Acrylnitril, Methacrylnitril, $C_1$-$C_8$-Alkylmethacrylat, $C_1$-$C_8$-Alkylacrylat, Maleinsäureanhydrid und/oder N-substituierte Maleinimide (B.2).

$C_1$-$C_8$-Alkylacrylate bzw $C_1$-$C_8$-Alkylmethacrylate sind Ester der Acrylsäure bzw. Methacrylsäure und einwertiger Alkohole mit 1 bis 8 C-Atomen. Besonders bevorzugt sind Methacrylsäuremethylester, -ethylester und -propylester. Als besonders bevorzugter Methacrylsäureester wird Methylmethacrylat genannt.

Thermoplastische (Co)polymerisate mit einer Zusammensetzung gemäß Komponente B können bei der Pfropfpolymerisation zur Herstellung der Komponente C als Nebenprodukt entstehen, besonders dann, wenn große Mengen Monomere auf kleine Mengen Kautschuk gepfropft werden. Die erfindungsgemäß einzusetzende Menge an (Co)polymerisat B bezieht diese Nebenprodukte der Pfropfpolymerisation nicht mit ein.

Die (Co)polymerisate gemäß Komponente B sind harzartig, thermoplastisch und kautschukfrei.

Die thermoplastischen (Co)polymerisate B enthalten 50 bis 98, vorzugsweise 60 bis 95 Gew.-Teile B. 1 und 50 bis 2, vorzugsweise 40 bis 5 Gew.-Teile B.2.

Besonders bevorzugte (Co)polymerisate B sind solche aus Styrol mit Acrylnitril und gegebenenfalls mit Methylmethacrylat, aus α-Methylstyrol mit Acrylnitril und gegebenenfalls mit Methylmethacrylat, oder aus Styrol und α-Methylstyrol mit Acrylnitril und gegebenenfalls mit Methmethacrylat.

Die Styrol-Acrylnitril-Copolymerisate gemäß Komponente B sind bekannt und lassen sich durch radikalische Polymerisation, insbesondere durch Emulsions-, Suspensions-, Lösungs- oder Massepolymerisation herstellen. Die Copolymerisate gemäß Komponente B besitzen vorzugsweise Molekulargewichte $\overline{M}_w$ (Gewichtsmittel, ermittelt durch Lichtstreuung oder Sedimentation) zwischen 15 000 und 200 000.

Besonders bevorzugte erfindungsgemäße Copolymerisate B sind auch statistisch aufgebaute Copolymerisate aus Styrol und Maleinsäureanhydrid, die durch eine kontinuierliche Masse oder Lösungspolymerisation bei unvollständigen Umsätzen aus dem entsprechenden Monomeren hergestellt werden können.

Die Anteile der beiden Komponenten der erfindungsgemäß geeigneten statistisch aufgebauten Styrol-Maleinsäureanhydrid-Copolymeren können innerhalb weiter Grenzen variiert werden. Der bevorzugte Gehalt an Maleinsäureanhydrid liegt bei 5 bis 25 Gew.-%.

Die Molekulargewichte (Zahlenmittel $\overline{M}_n$) der erfindungsgemäß geeigneten statistisch aufgebauten Styrol-Maleinsäureanhydrid-Copolymeren gemäß Komponente B können über einen weiten Bereich variieren. Bevorzugt ist der Bereich von 60 000 bis 200 000. Bevorzugt ist für diese Produkte eine Grenzviskosität von 0,3 bis 0,9 (gemessen in Dimethylformamid bei 25°C; siehe hierzu Hoffmann, Krömer, Kuhn, Polymeranalytik I, Stuttgart 1977, Seite 316 ff.).

Anstelle von Styrol können die Vinyl(Co)polymerisate B auch kernsubstituierte Styrole wie p-Methylstyrol, Vinyltoluol, 2,4-Dimethylstyrol und andere substituierte Styrole wie α-Methylstyrol enthalten.

**Komponente C**

Die Pfropfpolymerisate C umfassen z.B. Pfropfcopolymerisate mit kautschukelastischen Eigenschaften, die im wesentlichen aus mindestens 2 der folgenden Monomeren erhältlich sind: Chloropren, Butadien-1,3, Isopropen, Styrol, Acrylnitril, Ethylen, Propylen, Vinylacetat und (Meth)-Acrylsäureester mit 1 bis 18 C-Atomen in der Alkoholkomponente; also Polymerisate, wie sie z.B. in "Methoden der Organischen Chemie" (Houben-Weyl), Bd. 14/1, Georg Thieme-Verlag, Stuttgart 1961, S. 393-406 und in C.B. Bucknall, "Thoughened Plastics", Appl. Science Publishers, London 1977, beschrieben sind. Bevorzugte Polymerisate C sind partiell vernetzt und besitzen Gelgehalte von über 20 Gew.-%, vorzugsweise über 40 Gew.-%, insbesondere über 60 Gew.-%.

Bevorzugte Pfropfpolymerisate C umfassen Pfropfpolymerisate aus:

C.1 5 bis 95, vorzugsweise 30 bis 80 Gew.-Teile, einer Mischung aus

C.1.1 50 bis 95 Gew.-Teilen Styrol, α-Methylstyrol, halogen- oder methylkernsubstituiertem Styrol, $C_1$-$C_8$-Alkylmethacrylat, insbesondere Methylmethacrylat, $C_1$-$C_8$-Alkylacrylat, insbesondere Methylmethacrylat oder Mischungen dieser Verbindungen und

C. 1.2 5 bis 50 Gew.-Teilen Acrylnitril, Methacrylnitril, $C_1$-$C_8$-Alkylmethacrylaten. insbesondere Methylmethacrylat, $C_1$-$C_8$-Alkylacrylat, insbesondere Methacrylat, Maleinsäureanhydrid, $C_1$-$C_4$-alkyl-bzw. phenyl-N-substituierte Maleinimide oder Mischungen dieser Verbindungen auf

C.2 5 bis 95, vorzugsweise 20 bis 70 Gew.-Teilen Polymerisat mit einer Glasübergangstemperatur unter -10°C.

Bevorzugte Pfropfpolymerisate C sind z.B. mit Styrol und/oder Acrylnitril und/oder (Meth)-Acrylsäurealkylestern gepfropfte Polybutadiene, Butadien/Styrol-Copolymerisate und Acrylatkautschuke; d.h. Copolymerisate der in der DE-OS 1 694 173 (=US-PS 3 564 077) beschriebenen Art; mit Acryl- oder Methacrylsäurealkylestern, Vinylacetat, Acrylnitril, Styrol und/oder Alkylstyrolen gepfropfte Polybutadiene, Butadien/Styrol oder Butadien/Acrylnitril-Copolymerisate, Polyisobutene oder Polyisoprene, wie sie z.B. in der DE-OS 2 348 377 (=US-PS 3 919 353) beschrieben sind.
Besonders bevorzugte Polymerisate C sind z.B. ABS-Polymerisate, wie sie z.B. in der DE-OS 2 035 390 (=US-PS 3 644 574) oder in der DE-OS 2 248 242 (=GB-PS 1 409 275) beschrieben sind.
Besonders bevorzugte Pfropfpolymerisate C sind Pfropfpolymerisate, die durch Pfropfreaktion von

I. 10 bis 70, vorzugsweise 15 5 bis 50, insbesondere 20 bis 40 Gew.-%, bezogen auf Pfropfprodukt, mindestens eines (Meth)-Acrylsäureesters oder 10 bis 70, vorzugsweise 15 bis 50, insbesondere 20 bis 40 Gew -% eines Gemisches aus 10 bis 50, vorzugsweise 20 bis 35 Gew.-%. bezogen auf Gemisch, Acrylnitril oder (Meth)-Acrylsäureester und 50 bis 90, vorzugsweise 65 bis 80 Gew.-%, bezogen auf Gemisch, Styrol auf

II. 30 bis 90, vorzugsweise 50 bis 85, insbesondere 60 bis 80 Gew.-%, bezogen auf Pfropfprodukt, eines Butadien-Polymerisats mit mindestens 50 Gew.-%, bezogen auf II, Butadienresten als Pfropfgrundlage

erhältlich sind,
wobei vorzugsweise der Gelanteil der Pfropfgrundlage II mindestens 70 Gew.-% (in Toluol gemessen), der Pfropfgrad G 0,15 bis 0,55 und der mittlere Teilchendurchmesser $d_{50}$ des Pfropfpolymerisats 0,05 bis 2 µm, vorzugsweise 0,1 bis 0,6 µm betragen.
(Meth)-Acrylsäureester I sind Ester der Acrylsäure oder Methacrylsäure und einwertiger Alkoholen mit 1 bis 18 C-Atomen. Besonders bevorzugt sind Methacrylsäuremethylester, -ethylester und -propylester.
Die Pfropfgrundlage II kann neben Butadienresten bis zu 50 Gew.-%, bezogen auf II, Reste anderer ethylenisch ungesättigter Monomeren, wie Styrol, Acrylnitril, Ester der Acryl- oder Methacrylsäure mit 1 bis 4 C-Atomen in der Alkoholkomponente (wie Methylacrylat, Ethylacrylat, Methylmethacrylat, Elhylmethacrylat), Vinylester und/oder Vinylether enthalten. Die bevorzugte Pfropfgrundlage 11 besteht aus reinem Polybutadien.
Der Pfropfgrad G bezeichnet das Gewichtsverhältnis von aufgepfropften Pfropfmonomeren zur Pfropfgnrndlage und ist dimensionslos.
Die mittlere Teilchengröße $d_{50}$ ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-796) bestimmt werden.
Besonders bevorzugte Polymerisate C sind z.B. auch Pfropfpolymerisate aus

(a) 20 bis 90 Gew.-%, bezogen auf C, Acrylatkautschuk mit einer Glasübergangstemperatur unter -20°C als Pfropfgrundlage und

(b) 10 bis 80 Gew.-%, bezogen auf C, mindestens eines polymerisierbaren, ethylenisch ungesättigten Monomeren (vgl. C.1)) als Pfropfmonomere.

Die Acrylatkautschuke (a) der Polymerisate C sind vorzugsweise Polymerisate aus Acrylsäurealkylestern, gegebenenfalls mit bis zu 40 Gew.-%, bezogen auf (a), anderer polymerisierbarer, ethylenisch ungesättigter Monomerer. Zu den bevorzugten polymerisierbaren Acrylsäureestern gehören $C_1$-$C_8$-Alkylester, beispielsweise Methyl-, Ethyl-, Butyl-, n-Octyl- und 2-Ethyfhexylester; Halogenalkylester, vorzugsweise Halogen-$C_1$-$C_8$-alkylester, wie Chlorethylacrylat, sowie Mischungen dieser Monomeren.
Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen oder gesättigter Polyole mit 2 bis 4 OH-Gruppen und 2 bis 20 C-Atomen, wie z.B. Ethylenglykoldimethacrylat, Allylmethacrylat; mehrfach ungesättigte heterocyclische Verbindungen, wie z.B. Trivinyl- und Triallylcyanurat; polyfunktionelle Vinylverbindungen, wie Di- und Trivinylbenzole; aber auch Triallylphosphat und Diallylphthalat.
Bevorzugt vernetzende Monomere sind Allylmethacrylat, Ethylenglykoldimethylacrylat, Diallylphthalat und

heterocyclische Verbindungen, die mindestens 3 ethylenisch ungesättigte Gruppen aufweisen.

Besonders bevorzugte vernetzende Monomere sind die cyclischen Monomeren Triallylcyanurat, Triallylisocyanurat, Trivinylcyanurat, Triacryloylhexahydro-s-triazin, Triallylbenzole.

Die Menge der vernetzenden Monomeren beträgt vorzugsweise 0,02 bis 5, insbesondere 0,05 bis 2 Gew.-%, bezogen auf die Pfropfgrundlage (a).

Bei cyclischen vernetzenden Monomeren mit mindestens 3 ethylenisch ungesättigten Gruppen ist es vorteilhaft, die Menge auf unter 1 Gew.-% der Pfropfgrundlage (a) zu beschränken.

Bevorzugte "andere" polymerisierbare, ethylenisch ungesättigte Monomere, die neben den Acrylsäureestern gegebenenfalls zur Herstellung der Pfropfgrundlage (a) dienen können, sind z.B. Acrylnitril, Styrol, α-Methylstyrol, Acrylamide, Vinyl-$C_1$-$C_6$-alkylether, Methylmethacrylat, Butadien. Bevorzugte Acrylatkautschuke als Pfropfgrundlage (a) sind Emulsionspolymerisate, die einen Gelgehalt von mindestens 60 Gew.-% aufweisen.

Weitere geeignete Pfropfgrundlagen sind Silikonkautschuke mit pfropfaktiven Stellen, wie sie in Offenlegungsschriften DE-OS 3 704 657, DE-OS 3 704 655, DE-OS 3 631 540 und DE-OS 3 63 1 539 beschrieben werden.

Der Gelgehalt der Pfropfgrundlage (a) wird bei 25°C in Dimethylformamid bestimmt (M. Hoffmann, H. Krömer, R. Kuhn, Polymeranalytik 1 und 11, Georg Thieme-Verlag, Stuttgart 1977).

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten C auch solche Produkte verstanden, die durch Polymerisation der Pfropfmonomeren in Gegenwart der Pfropfgrundlage gewonnen werden.

## Komponente D

Die erfindungsgemäßen Formmassen enthalten als Flammschutzmittel Phosphorverbindungen gemäß Formel (1),

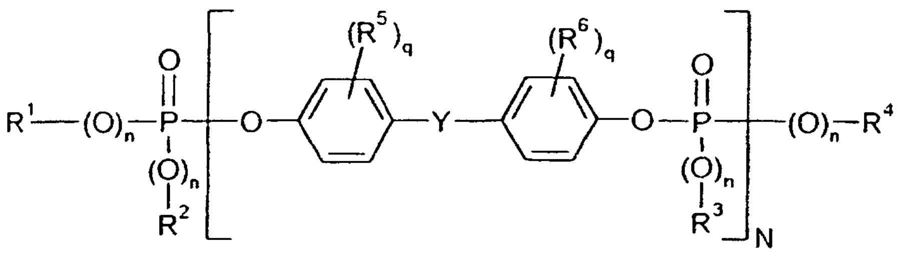

(I)

in der die Reste die o.g. Bedeutungen haben.

Die erfindungsgemäß geeigneten Phosphorverbindungen gemäß Komponente D sind generell bekannt (s. beispielsweise Ullmanns Encyklopädie der Technischen Chemie, Bd. 18, S. 301 ff. 1979, Houben-Weyl, Methoden der Organischen Chemie, Bd. 12/1, S. 43; Beilstein, Bd. 6, S. 177). Bevorzugte Substituenten $R^1$ bis $R^4$ umfassen Methyl, Butyl, Octyl, Chlorethyl, 2-Chlorpropyl, 2,3-Dibrompropyl, Phenyl, Kresyl, Cumyl, Naphthyl, Chlorphenyl, Bromphenyl, Pentachlorphenyl und Pentabromphenyl. Besonders bevorzugt sind Methyl, Ethyl, Butyl, Phenyl und Naphthyl.

Die aromatischen Gruppen $R^1$, $R^2$, $R^3$ und $R^4$ können mit Halogen und/oder $C_1$-$C_4$-Alkyl substituiert sein. Besonders bevorzugte Aryl-Reste sind Kresyl, Phenyl, Xylenyl, Propylphenyl oder Butylphenyl sowie auch die bromierten und chlorierten Derivate davon.

$R^5$ und $R^6$ bedeuten unabhängig voneinander vorzugsweise Methyl oder Brom.

Y steht vorzugsweise für $C_1$-$C_7$-Alkylen, insbesondere für Isopropyliden oder Methylen. n in der Formel (1) kann unabhängig voneinander 0 oder 1 sein, vorzugsweise ist n gleich 1. q kann 0, 1, 2, 3 oder 4 sein, vorzugsweise ist q 0, 1 oder 2.

N kann Werte von 0,1 bis 5, vorzugsweise von 0,3 bis 2 einnehmen. Als erfindungsgemäße Komponente D können auch Mischungen verschiedener Phosphate eingesetzt werden. In diesem Fall hat N einen Durchschnittswert von 0,1 bis 5, vorzugsweise 0,3 bis 2. In diesem Gemisch können als Phosphorverbindungen auch Monophosphorverbindungen enthalten sein (N=0).

Monophosphorverbindungen gemäß Formel (I) mit N = 0 sind vorzugsweise Tributylphosphat, Tris-(2-chlorethyl)-phosphat, Tris-(2,3-dibrompropyl)-phosphat, Triphenylphosphat, Trikresylphosphat, Diphenylkresylyphosphat, Diphenyloctylphosphat, Diphenyl-2-ethylkresylphosphat, Tri-(isopropylphenyl)-phosphat, halogensubstituierte Arylphosphate, Methylphosphonsäuredimethylester, Methylphosphonsäurediphenylester, Phenylphosphonsäurediethylester und Triphenylphosphinoxid.

**Komponente E**

Die fluorierten Polyolefine E sind hochmolekular und besitzen Glasübergangstemperaturen von über -30°C, in der Regel von über 100°C Ihre Fluorgehalte betragen vorzugsweise 65 bis 76, insbesondere 70 bis 76 Gew.-%. Ihre mittlere Teilchendurchmesser $d_{50}$ betragen im allgemeinen 0,05 bis 1.000, vorzugsweise 0,08 bis 20 µm. Im allgemeinen haben die fluorierten Polyolefine E eine Dichte von 1,2 bis 2,3 g/cm$^3$.

Bevorzugte fluorierte Polyolefine E sind Polytetrafluorethylen. Polyvinylidenfluorid, Tetrafluorethylen/Hexafluorpropylen- und Ethylen/Tetrafluorethylen-Copolymerisate.

Die fluorierten Polyolefine sind bekannt (vgl. "Vinyl and Related Polymers" von Schildknecht, John Wiley & Sons, Inc., New York, 1962, Seite 484 bis 494; "Fluorpolymers" von Wall, Wiley-Interscience, John Wiley & Sons, Inc., New York, Band 13, 1970, Seite 623 bis 654; "Modern Plastics Encyclopedia", 1970 bis 1971, Band 47, Nr. 10A, Oktober 1970, Mc Graw-Hill, Inc., New York, Seite 134 und 774; "Modern Plastics Encyclopedia", 1975 bis 1976, Oktober 1975, Band 52, Nr. 10A, Mc Graw-Hill, Inc., New York, Seite 27, 28 und 472 und US-PS 3 671 487, 3 723 373 und 3 838 092).

Sie können nach bekannten Verfahren hergestellt werden, so beispielsweise durch Polymerisation von Tetrafluorethylen in wäßrigem Medium mit einem freie Radikale bildenden Katalysator, beispielsweise Natrium-, Kalium- oder Ammoniumperoxydisulfat bei Drücken von 7 bis 71 kg/cm$^2$ und bei Temperaturen von 0 bis 200°C, vorzugsweise bei Temperaturen von 20 bis 100°C. (Nähere Einzelheiten siehe z.B. US-Patent 2 393 967.) Je nach Einsatzform kann die Dichte dieser Materialien zwischen 1,2 und 2,3 g/cm$^3$, die mittlere Teilchengröße zwischen 0,05 und 1.000 µm liegen.

Bevorzugte fluorierte Polyolefine E sind Tetrafluorethylenpolymerisate. Sie haben mittlere Teilchendurchmesser von 0,05 bis 20 µm, vorzugsweise 0,08 bis 10 µm, und eine Dichte von 1,2 bis 1,9 g/cm$^3$ und werden vorzugsweise in Form einer koagulierten Mischung von Emulsionen der Tetrafluorethylenpolymerisate E mit Emulsionen der Pfropfpolymerisate C eingesetzt.

Geeignete, in Pulverform einsetzbare fluorierte Polyolefine E sind Tetrafluorethylenpolymerisate mit mittleren Teilchendurchmessern von 100 bis 1.000 µm und Dichten von 2,0 g/cm$^3$ bis 2,3 g/cm$^3$.

Zur Herstellung einer koagulierten Mischung aus C und E wird zuerst eine wäßrige Emulsion (Latex) eines Pfropfpolymerisates C mit mittleren Latexteilchendurchmessern von 0,05 bis 2 µm, insbesondere 0, 1 bis 0,6µm, mit einer feinteiligen Emulsion eines Tetrafluorethylenpolymerisates E in Wasser mit mittleren Teilchendurchmessern von 0,05 bis 20 µm, insbesondere von 0,08 bis 10 µm, vermischt; geeignete Tetrafluorethylenpolymerisat-Emulsionen besitzen üblicherweise Feststoffgehalte von 30 bis 70 Gew.-%, insbesondere von 50 bis 60 Gew.-%. Die Emulsionen der Pfropfpolymerisate C besitzen Feststoffgehalte von 25 bis 50 Gew.-%, vorzugsweise von 30 bis 45 Gew.-%.

Die Mengenangabe bei der Beschreibung der Komponente C schließt den Anteil des Pfropfpolymerisats in der koagulierten Mischung aus Pfropfpolymerisat und fluorierten Polyolefinen nicht mit ein.

In der Emuisionsmischung liegt das Gewichtsverhältnis Pfropfpolymerisat C zum Tetrafluorethylenpolymerisat E bei 95:5 bis 60:40. Die Emulsionsmischung wird in bekannter Weise koaguliert, beispielsweise durch Sprühtrocknen, Gefriertrocknung oder Koagulation mittels Zusatz von anorganischen oder organischen Salzen, Säuren, Basen oder organischen, mit Wasser mischbaren Lösemitteln, wie Alkoholen, Ketonen, vorzugsweise bei Temperaturen von 20 bis 150°C, insbesondere von 50 bis 100°C. Falls erforderlich, kann bei 50 bis 200°C, bevorzugt 70 bis 100°C, getrocknet werden.

Geeignete Tetrafluorethylenpolymerisat-Emulsionen sind handelsübliche Produkte und werden beispielsweise von der Firma DuPont als Teflon® 30 N angeboten.

**Komponente F**

Feinstteilige anorganische Verbindungen gemäß Komponente F bestehen aus Verbindungen eines oder mehrerer Metalle der 1. bis 5. Hauptgruppe und 1. bis 8. Nebengruppe des Periodensystems, bevorzugt 2. bis 5. Hauptgruppe und 4. bis 8. Nebengruppe, besonders bevorzugt 3. bis 5. Hauptgruppe und 4. bis 8. Nebengruppe mit mindestens einem Element ausgewählt aus der Gruppe bestehend aus Sauerstoff, Schwefel, Bor, Phosphor, Kohlenstoff, Stickstoff, Wasserstoff und Silicium.

Bevorzugte Verbindungen sind beispielsweise Oxide, Hydroxide, wasserhaltige Oxide, Sulfate, Sulfite, Sulfide, Carbonate, Carbide, Nitrate, Nitrite, Nitride, Borate, Silikate, Phosphate, Hydride, Phosphite oder Phosphonate.

Bevorzugte feinstteilige anorganischen Verbindungen sind beispielsweise TiN, $TiO_2$, $SnO_2$,WC, ZnO, $Al_2O_3$, AlO(OH), $ZrO_2$, $Sb_2O_3$, $SiO_2$, Eisenoxide, $NaSO_4$, $BaSO_4$, Vanadianoxide, Zinkborat, Silicate wie Al-Silikate, Mg-Silikate, ein, zwei, dreidimensionale Silikate, Mischungen und dotierte Verbindungen sind ebenfalls verwendbar. Desweiteren können diese nanoskaligen Partikel mit organischen Molekülen oberflächenmodifiziert sein, um eine bessere Verträglichkeit mit den Polymeren zu erzielen. Auf diese Weise lassen sich hydrophobe oder hydrophile Oberflächen erzeugen.

Die durchschnittlichen Teilchendurchmesser sind kleiner gleich 200 nm, bevorzugt kleiner gleich 150 nm,

insbesondere 1 bis 100 nm.

Teilchengröße und Teilchendurchmesser bedeutet immer den mittleren Teilchendurchmesser $d_{50}$, ermittelt durch Ultrazentrifugenmessungen nach W. Scholtan et al. Kolloid-Z. und Z. Polymere 250 (1972), S. 782 bis 796.

Die anorganischen Verbindungen können als Pulver, Pasten, Sole, Dispersionen oder Suspensionen vorliegen. Durch Ausfällen können aus Dispersionen, Sole oder Suspensionen Pulver erhalten werden.

Die Pulver können nach üblichen Verfahren in die thermoplastischen Kunststoffe eingearbeitet werden, beispielsweise durch direktes Kneten oder Extrudieren der Bestandteile der Formmasse und den feinstteiligen anorganischen Pulvern. Bevorzugte Verfahren stellen die Herstellung eines Masterbatch, z.B. in Flammschutzadditiven, anderen Additiven, Monomeren, Lösungsmitteln, in Komponente A oder die Cofällung von Dispersionen der Komponenten B oder C mit Dispersionen, Suspensionen, Pasten oder Solen der feinstteiligen anorganischen Materialien dar.

Die erfindungsgemäßen Formmassen können übliche Additive, wie Gleit- und Entformungsmittel, Nukleiermittel, Antistatika, Stabilisatoren, Füll- und Verstärkungsstoffe sowie Farbstoffe und Pigmente enthalten.

Die gefüllten bzw. verstärkten Formmassen können bis zu 60, vorzugsweise 10 bis 40 Gew.-%, bezogen auf die gefüllte bzw. verstärkte Formmasse, Füll- und/oder Verstärkungsstoffe enthalten. Bevorzugte Verstärkungsstoffe sind Glasfasern. Bevorzugte Füllstoffe, die auch verstärkend wirken könne, sind Glaskugeln, Glimmer, Silikate, Quarz, Talkum, Titandioxid, Wollastonit.

Die erfindungsgemäßen Formmassen, bestehend aus den Komponenten A bis F und gegebenenfalls weiteren bekannten Zusätzen wie Stabilisatoren, Farbstoffen, Pigmenten, Gleit- und Entformungsmitteln, Füll- und Verstärkungsstoffen, Nukleiermittel sowie Antistatika, werden hergestellt, indem man die jeweiligen Bestandteile in bekannter Weise vermischt und bei Temperaturen von 200°C bis 300°C in üblichen Aggregaten wie Innenknetern, Extrudern und Doppelwellenschnecken schmelzcompoundiert oder schmelzextrudiert, wobei die Kompoente E vorzugsweise in Form der bereits erwähnten koagulierten Mischung eingesetzt wird.

Die erfindungsgemäßen Formmassen können gegebenenfalls von Verbindungen der Formel (1) verschiedene Flammschutzmittel in einer Menge bis zu 20 Gew.-Teilen enthalten. Bevorzugt sind synergistisch wirkende Flammschutzmittel. Beispielhaft werden als weitere Flammschutzmittel organische Halogenverbindungen wie Decabrombisphenylether, Tetrabrombisphenol, anorganische Halogenverbindungen wie Ammoniumbromid, Stickstoffverbindungen, wie Melamin, Melaminformaldehyd-Harze oder Siloxanverbindungen genannt. Die erfindungsgemäßen Formmassen können gegebenenfalls von den anorganischen Verbindungen F abweichende anorganische Substanzen enthalten wie beispielsweise anorganische Hydroxidverbindungen wie Mg-, Al-hydroxid, anorganische Verbindungen wie Aluminiumoxid, Antimon-oxide, Barium-metaborat, Hydroxoantimonat, Zirkon-oxid, Zirkon-hydroxid, Molybdänoxid, Ammonium-molybdat, Zink-borat, Ammonium-borat, Barium-metaborat und Zinnoxid.

Gegenstand der vorliegenden Erfindung ist somit auch ein Verfahren zur Herstellung von thermoplastischen Formmassen, bestehend aus den Komponenten A bis F sowie gegebenenfalls Stabilisatoren, Farbstoffen, Pigmenten, Gleit- und Entformungsmitteln, Füll- und Verstärkungsstoffen, Nukleiermitteln sowie Antistatika, das dadurch gekennzeichnet ist, daß man die Komponenten und Zusatzstoffe nach erfolgter Vermischung bei Temperaturen von 200 bis 300°C in gebräuchlichen Aggregaten schmelzcompoundiert oder schmelzextrudiert, wobei die Komponente E vorzugsweise in Form einer koagulierten Mischung mit der Komponente C eingesetzt wird.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Die Formmassen der vorliegenden Erfindung können zur Herstellung von Formkörpern jeder Art verwendet werden. Insbesondere können Formkörpern durch Spritzguß hergestellt werden. Beispiele für herstellbare Formkörper sind Gehäuseteile jeder Art, z.B. für Haushaltsgeräte, wie Saftpressen, Kaffeemaschinen, Mixer, für Büromaschinen, wie Computer, Drucker, Monitore oder Abdeckplatten für den Bausektor und Teile für den Kfz-Sektor. Sie werden außerdem auf dem Gebiet der Elektrotechnik eingesetzt, weil sie sehr gute elektrische Eigenschaften haben.

Besonders geeignet sind die Formmassen zur Herstellung von dünnwandigen Formteilen (z.B. Datentechnik-Gehäuseteile), wo besonders hohe Ansprüche an Kerbschlagzähigkeit und Spannungsrißbeständigkeit der eingesetzten Kunststoffe gestellt werden.

Eine weitere Form der Verarbeitung ist die Herstellung von Formkörpern durch - Blasformen oder durch Tiefziehen aus vorher hergestellten Platten oder Folien.

## Beispiele

### Komponente A

Polycarbonat auf Basis Bisphenol A mit einer relativen Lösungsviskosität von 1,26 bis 1,28, gemessen in Methylenchlorid bei 25°C und in einer Konzentration von 0,5 g/100 ml.

**Komponente B**

Styrol/Acrylnitril-Copolymerisat mit einem Styrol/Acrylnitril-Verhältnis von 72:28 und einer Grenzviskosität von 0,55 dl/g (Messung in Dimethylformamid bei 20°C).

**Komponente C**

Pfropfpolymerisat von 45 Gew.-Teilen Styrol und Acrylnitril im Verhältnis von 72:28 auf 55 Gew.-Teile teilchenförmigen vernetzten Polybutadienkautschuk (mittlerer Teilchendurchmesser $d_{50}$ = 0,4μm), hergestellt durch Emulsionspolymerisation.

**Komponente D**

D.I:

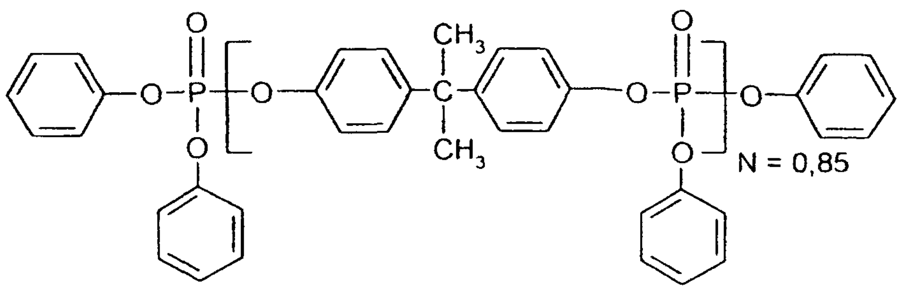

D.2: Triphenylphosphat (Disflamoll®) (TPP) der Firma Bayer AG, Leverkusen, Deutschland

D.3: Fyroltlex RDP der Finna Akzo auf Basis m-Phenylen-bis(di-phenyl-phosphat)

**Komponente E**

Tetrafluorethylenpolymerisat als koagufierte Mischung aus einer SAN-Pfropfpolymerisat-Emulsion gemäß Komponente C in Wasser und einer Tetrafluorethylenpolymerisat-Emulsion in Wasser. Das Gewichtsverhältnis Pfropfpolymerisat C zum Tetrafluorethylenpolymerisat E in der Mischung ist 90 Gew.-% zu 10 Gew.-%. Die Tetrafluorethylenpolymerisat-Emulsion besitzt einen Feststoffgehalt von 60 Gew.-%, der mittlere Teilchendurchmesser liegt zwischen 0,05 und 0,5μm. Die SAN-Pfropfpolymerisat-Emulsion besitzt einen Feststoffgehalt von 34 Gew.-% und einen mittleren Latexteilchendurchmesser von 0,4μm.

**Herstellung von E**

Die Emulsion des Tetrafluorethylenpolymerisats (Teflon 30 N der Fa. DuPont) wird mit der Emulsion des SAN-Pfropfpolymerisats C vermischt und mit 1,8 Gew.-%. bezogen auf Polymerfeststoff, phenolischer Antioxidantien stabilisiert. Bei 85 bis 95°C wird die Mischung mit einer wäßrigen Lösung von $MgSO_4$ (Bittersalz) und Essigsäure bei pH 4 bis 5 koaguliert, filtriert und bis zur praktischen Elektrolytfreiheit gewaschen, anschließend durch Zentrifugation von der Hauptmenge Wasser befreit und danach bei 100°C zu einem Pulver getrocknet. Dieses Pulver kann dann mit den weiteren Komponenten in den beschriebenen Aggregaten compoundiert werden.

**Komponente F**

Als feinstteilige anorganische Verbindung wird Pural 200, ein Aluminiumoxid-hydroxid (Fa. Condea, Hamburg, Deutschland), eingesetzt. Die mittlere Teilchengröße des Materials beträgt ca. 50 nm.

<u>**Herstellung und Prüfung der erfindungsgemäßen Formmassen**</u>

Das Mischen der Komponenten A bis F erfolgt auf einem 3 1-Innenkneter. Die Formkörper werden auf einer Spritzgießmaschine Typ Arburg 270E bei 260°C hergestellt.

Das Spannungsrißverhalten wird an Stäben der Abmessung 80 x 10 x 4 mm, Massetemperatur 260°C untersucht. Als Testmedium wird eine Mischung aus 60 Vol.-% Toluol und 40 Vol.-% Isopropanol verwendet. Die Probekörper werden mittels einer Kreisbogenschablone vorgedehnt (Vordehnung 1,2 bis 2,4 %) und bei Zimmertemperatur im Testmedium gelagert. Das Spannungsrißverhalten wird über die Rißbildung in Abhängigkeit von der Vordehnung bzw. den Bruch in Abhängigkeit von der Expositionszeit im Testmedium beurteilt.

Der Flammtest erfolgt nach UL 94/IEC 707FV.

Die Bestimmung der Kerbschlagzähigkeit $a_k$ erfolgt nach Methode ISO 180 1A an Stäben der Abmessung 80x10x4 mm bei Raumtemperatur.

Die Bestimmung der Wärmeformbeständigkeit nach Vicat B erfolgt gemäß DIN 53 460.

Die Zusammensetzung der geprüften Materialien sowie die erhaltenen Daten sind in der folgenden Tabelle zusammengefaßt.

Tabelle

| Beispiele | 1 Vergleich | 2 Vergleich | 3 Vergleich | 4 | 5 |
|---|---|---|---|---|---|
| Komponenten: [Gew.-Teile] | | | | | |
| A | 67,0 | 67,0 | 67,0 | 67,0 | 67,0 |
| B | 9,5 | 9,5 | 9,5 | 9,5 | 9,5 |
| C | 8,0 | 8,0 | 8,0 | 8,0 | 8,0 |
| D.1 | 12,0 | - | - | 12,0 | 14,0 |
| D.2 | - | 12,0 | - | - | - |
| D.3 | - | - - | 12,0 | - | - |
| E | 3,5 | 3,5 | 3,5 | 3,5 | 3,5 |
| F | - | - | - | 1,0 | 1,0 |
| Eigenschaften: | | | | | |
| Vicat B 120 [°C] | 103 | 88 | 94 | 103 | 108 |
| $a_k$ (kJ/m$^2$) | 43 | 37 | 33 | 44 | 48 |
| ESC-Verhalten | | | | | |
| 2,4 % | BR5:00 | | | BR5:50 | BR7:00 |
| 1,8 % | | | BR4:30 | | |
| 1,6 % | | BR4:00 | | | |
| UL 94 V 1,6 mm | V-2 | V-0 | V-0 | V-0 | V-0 |

Aus der Tabelle geht hervor, daß das Vergleichsbeispiel 1, das Komponente D.1 als Flammschutz enthält, zwar bessere mechanische Eigenschaften aufweist als die Vergleichsbeispiele 2 und 3, die Komponente D.2 und D. 3 als Flammschutzmittel enthalten, jedoch im Flammschutzverhalten Nachteile aufweist (V2). Erst durch Zugabe des feinstteiligen anorganischen Materials wird dieser Nachteil ausgeglichen (Beispiele 4 und 5). Die mechanischen Eigenschaften wie Kerbschlagzähigkeit und Spannungsrißverhalten der erfindungsgemäßen Beispiele 4 und 5 sind ebenfalls deutlich verbessert. Die erfindungsgemäßen Beispiele zeigen die angestrebte günstige Eigenschaftskombination aus Flammwidrigkeit, mechanischen Eigenschaften und hoher Wärmeformbeständigkeit.

## Patentansprüche

**1.** Flammwidrige, thermoplastische Formmassen enthaltend

A. 40 bis 98 Gew.-Teile eines aromatischen Polycarbonats,

B. 0 bis 50 Gew.-Teile eines Vinylcopolymerisats,

C. 0,5 bis 60 Gew.-Teile eines Pfropfpolymerisats,

D. 0,5 bis 20 Gew.-Teile einer Phosphorverbindung der Formel (I)

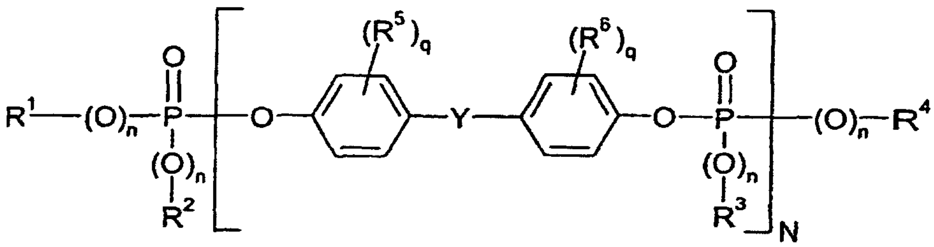 (I)

worin

| | |
|---|---|
| $R^1$, $R^2$, $R^3$ und $R^4$, | unabhängig voneinander gegebenenfalls durch Halogen substituiertes $C_1$-$C_8$-Alkyl, jeweils gegebenenfalls durch Halogen und/oder Alkyl substituiertes $C_5$-$C_6$-Cycloalkyl, $C_6$-$C_{10}$-Aryl oder $C_7$-$C_{12}$-Aralkyl, |
| n | unabhängig voneinander 0 oder 1, |
| q | unabhängig voneinander 0, 1, 2, 3 oder 4, |
| N | 0, 1 bis 5 und |
| $R^5$ und $R^6$ | unabhängig voneinander $C_1$-$C_4$-Alkyl, vorzugsweise Methyl oder Halogen, vorzugsweise Chlor und/oder Brom bedeuten, |
| Y | $C_1$-$C_7$-Alkyliden, $C_1$-$C_7$-Alkylen, $C_5$-$C_{12}$-Cycloalkylen, $C_5$-$C_{12}$-Cycloalkyliden, -O-, -S-, -SO-, $-SO_2-$ oder -CO- bedeutet, |

E. 0,05 bis 5 Gew.-Teile fluoriertes Polyolefin,

F. 0,1 bis 50 Gew.-Teile feinstteilige anorganische Verbindung mit einem mittleren Teilchendurchmesser <200 nm,

wobei Komponente F aus Verbindungen eines oder mehrerer Metalle der 1. bis 5. Hauptgruppe oder 1. bis 8. Nebengruppe des Periodensystems mit wenigstens einem Element ausgewählt aus der Gruppe bestehend aus Sauerstoff, Schwefel, Bor, Kohlenstoff, Phosphor, Stickstoff, Wasserstoff und Silicium besteht und die Summe aller Gewichtsteile A + B + C + D + E + F 100 ergibt.

**2.** Formmassen gemäß Anspruch 1, worin Komponente F ausgewählt ist aus mindestens einer der Verbindungen TiN, $TiO_2$, $SnO_2$, WC, ZnO, $Al_2O_3$, AlO(OH), $ZrO_2$, $Sb_2O_3$, $SiO_2$, Zinkborat, $NaSO_4$, $BaSO_4$,Vanadiumoxide, Zinkborat, Silikate.

**3.** Formmassen gemäß einem der vorhergehenden Ansprüche, worin der mittlere Teilchendurchmesser der Komponente F kleiner gleich 150 nm ist.

**4.** Formmassen gemäß Anspruch 1, enthaltend 50 bis 95 Gew.-Teile eines aromatischen Polycarbonats A.

**5.** Formmassen gemäß Anspruch 1, enthaltend Pfropfpolymerisate C hergestellt durch Copolymerisation von 5 bis 95 Gew.-Teilen einer Mischung aus
50 bis 95 Gew.-Teilen Styrol, $\alpha$-Methylstyrol, halogen- oder alkylkernsubstituiertem Styrol, $C_1$-$C_8$-Alkylmethacrylat, $C_1$-$C_8$-Alkylacrylat oder Mischungen dieser Verbindungen und
5 bis 50 Gew.-Teilen Acrylnitril, Methacrylnitril, $C_1$-$C_8$-Alkylmethacrylat, $C_1$-$C_8$-Alkylacrylat, Maleinsäureanhydrid, $C_1$-$C_4$-alkyl- bzw. phenyl-N-substituiertem Maleinimid oder Mischungen dieser Verbindungen auf

5 bis 95 Gew.-Teile Kautschuk mit einer Glasübergangstemperatur unter -10°C.

6. Formmassen gemäß Anspruch 1, wobei in Formel (I) N einen Wert von 0,3 bis 2 besitzt.

7. Formmassen gemäß Anspruch 1, wobei Y in Formel (I) einen Methylen- oder Isopropyliden-Rest darstellt.

8. Formmassen nach Anspruch 1, wobei die Phosphorverbindung der Formel (I) mindestens eine Verbindung ausgewählt aus der Gruppe bestehend aus Tributylphosphat, Tris-(2-chlorethyl)-phosphat, Tris-(2,3-dibrompropyl)-phosphat, Triphenylphosphat, Trikresylphosphat, Diphenylkresylphosphat, Diphenyloctylphosphat, Diphenyl-2-ethylkresylphosphat, Tri-(isopropylphenyl)-phosphat, halogensubstituierte Arylphosphate, Methylphosphonsäuredimethylester, Methylphosphonsäurediphenylester, Phenylphosphonsäurediethylester, Triphenylphosphinoxid, Trikresylphosphinoxid enthält.

9. Formmassen nach Ansprüchen 1 bis 8, **dadurch gekennzeichnet, daß** sie 0,01 bis 20 Gew.-%, bezogen auf die Gesamtformmasse wenigstens eines weiteren von Komponente D verschiedenen Flammschutzmittels enthalten.

10. Formmassen nach einem der vorhergehenden Ansprüche, enthaltend als Pfropfgrundlage C.2 einen Dienkautschuk, Acrylatkautschuk, Silikonkautschuk oder Ethylen-Propylen-Dien-Kautschuk.

11. Formmassen nach einem der Ansprüche 1 bis 11, wobei sie mindestens einen Zusatz aus der Gruppe der Stabilisatoren, Pigmente, Entformungsmittel, Fließhilfsmittel und/oder Antistatika enthalten.

12. Verwendung der Formmassen nach einem der Ansprüche 1 bis 11 zur Herstellung von Formkörpern.

13. Formkörper, hergestellt aus Formmassen nach einem der Ansprüche 1 bis 11.

**Claims**

1. Flame-proof thermoplastic moulding compositions containing

A. 40 to 98 parts by weight of an aromatic polycarbonate,

B. 0 to 50 parts by weight of a vinyl copolymer,

C. 0.5 to 60 parts by weight of a graft polymer,

D. 0.5 to 20 parts by weight of a phosphorus compound of formula (I)

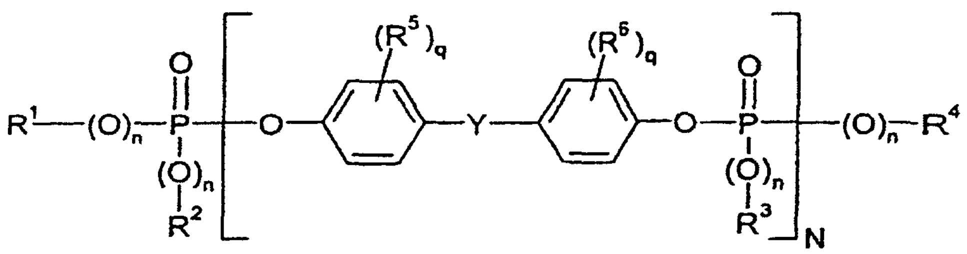

(I)

in which

| | |
|---|---|
| $R^1$, $R^2$, $R^3$ and $R^4$ | independently of each other mean $C_1$-$C_8$ alkyl optionally substituted by halogen, $C_5$-$C_6$-cycloalkyl, $C_6$-$C_{10}$-aryl or $C_7$-$C_{12}$-aralkyl optionally substituted by halogen and/or alkyl in each case, |
| n | independently of each other means 0 or 1, |

| | |
|---|---|
| q | independently of each other means 0, 1, 2, 3 or 4, |
| N | means 0.1 to 5 and |
| $R^5$ and $R^6$ | independently of each other mean $C_1$-$C_4$-alkyl, preferably methyl or halogen, preferably chlorine and/or bromine, |
| Y | means $C_1$-$C_7$-alkylidene, $C_1$-$C_7$-alkylene, $C_5$-$C_{12}$-cycloalkylene, $C_5$-$C_{12}$-cycloalkylidene, -O-, -S-, -SO-, $-SO_2-$ or -CO-, |

E. 0.05 to 5 parts by weight of fluorinated polyolefin,

F. 0.1 to 50 parts by weight of finely divided inorganic compound with an average particle diameter ≤ 200 nm,

wherein Component F consists of compounds of one or more metals of main groups 1 to 5 and sub-groups 1 to 8 of the periodic system with at least one element selected from the group consisting of oxygen, sulfur, boron, carbon, phosphorus, nitrogen, hydrogen and silicon and the sum of all parts by weight A + B + C + D + E + F is 100.

**2.** Moulding compositions according to Claim 1, wherein Component F is selected from at least one of the compounds TiN, $TiO_2$, $SnO_2$, WC, ZnO, $Al_2O_3$, AlO(OH), $ZrO_2$, $Sb_2O_3$, $SiO_2$, zinc borate, $NaSO_4$, $BaSO_4$, vanadium oxides, zinc borate, silicates.

**3.** Moulding compositions according to the preceding Claims, wherein the average particle diameter of component F is not greater than 150 nm.

**4.** Moulding compositions according to Claim 1, containing 50 to 95 parts by weight of an aromatic polycarbonate A.

**5.** Moulding compositions according to Claim 1, containing graft polymers C produced by copolymerization of
5 to 95 parts by weight of a mixture comprising
50 to 95 parts by weight of styrene, α-methylstyrene, halogen or alkyl ring-substituted styrene, $C_1$-$C_8$-alkyl methacrylate, $C_1$-$C_8$-alkyl acrylate, or mixtures of these compounds and
5 to 50 parts by weight of acrylonitrile, methacrylonitrile, $C_1$-$C_8$-alkyl methacrylate, $C_1$-$C_8$-alkyl acrylate, maleic anhydride, $C_1$-$C_4$-alkyl- and/or phenyl-N-substituted maleic imide or mixtures of these compounds on
5 to 95 parts by weight of rubber with a glass translation temperature below -10°C.

**6.** Moulding compositions according to Claim 1, wherein in formula (I) N has a value of 0.3 to 2.

**7.** Moulding compositions according to Claim 1, wherein in formula (I) Y represents a methylene or isopropylidene group.

**8.** Moulding compositions according to Claim 1, wherein the phosphorus compound of formula (I) contains at least one compound selected from the group consisting of tributyl phosphate, tris-(2-chloroethyl) phosphate, tris-(2,3-dibromopropyl) phosphate, triphenyl phosphate, tricresyl phosphate, diphenylcresyl phosphate, diphenyloctyl phosphate, diphenyl-2-ethylcresyl phosphate, tri-(isopropylphenyl) phosphate, halogen-substituted aryl phosphates, methyl phosphonic acid dimethyl esters, methyl phosphonic acid diphenyl esters, phenyl phosphonic acid diethyl esters, triphenyl phosphine oxide and tricresyl phosphine oxide.

**9.** Moulding compositions according to Claims 1 to 8, **characterized in that** they contain 0.01 to 20 wt.%, related to the total moulding composition, of at least one further flame-proofing agent different from Component D.

**10.** Moulding compositions according to one of the preceding Claims, containing as graft base C.2 a diene rubber, acrylate rubber, silicone rubber or ethylene/propylene/diene rubber.

**11.** Moulding compositions according to one of Claims 1 to 10, wherein they contain at least one addition from the group of stabilizers, pigments, mould release agents, flow auxiliary substances and/or anti-static agents.

**12.** Use of the moulding compositions according to one of Claims 1 to 11 to produce moulded bodies.

13. Moulded bodies, produced from moulding compositions according to one of Claims 1 to 11.

## Revendications

1. Matières à mouler thermoplastiques ignifuges contenant

A. 40 à 98 parties en poids d'un polycarbonate aromatique,
B. 0 à 50 parties en poids d'un copolymère vinylique,
C. 0,5 à 60 parties en poids d'un polymère greffé,
D. 0,5 à 20 parties en poids d'un dérivé du phosphore répondant à la formule (I)

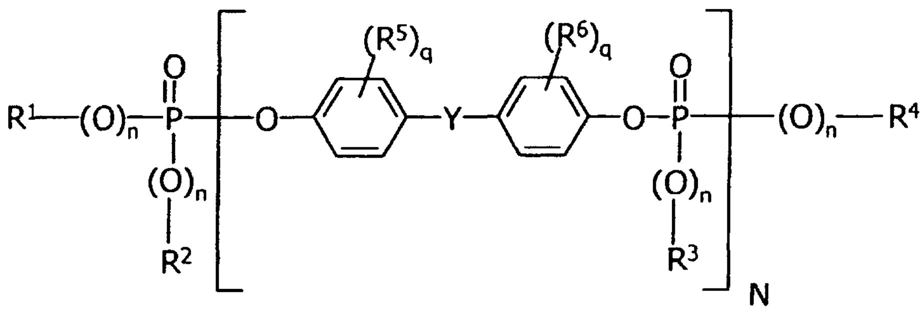

(I)

dans laquelle

| | |
|---|---|
| $R^1$, $R^2$, $R^3$ et $R^4$ | représentent chacun, indépendamment les uns des autres, un groupe alkyle en $C_1$-$C_8$ éventuellement substitué par des halogènes, un groupe cycloalkyle en $C_5$-$C_6$, aryle en $C_6$-$C_{10}$ ou aralkyle en $C_7$-$C_{12}$, chacun d'eux éventuellement substitué par des halogènes et/ou des groupes alkyle, |
| les indices n | sont égaux chacun, indépendamment les uns des autres, à 0 ou 1, |
| les indices q | sont égaux chacun, indépendamment l'un de l'autre, à 0, 1, 2, 3 ou 4, |
| N | est égal à 0 ou va de 1 à 5 et |
| $R^5$ et $R^6$ | représentent chacun, indépendamment l'un de l'autre, un groupe alkyle en $C_1$-$C_4$, de préférence un groupe méthyle, ou un halogène, de préférence le chlore et/ou le brome, |
| Y | représente un groupe alkylidène en $C_1$-$C_7$, alkylène en $C_1$-$C_7$, cycloalkylène en $C_5$-$C_{12}$, cycloalkylidène en $C_5$-$C_{12}$, -O-, -S-, -SO-, -$SO_2$- ou -CO-, |

E. 0,05 à 5 parties en poids d'une polyoléfine fluorée,
F. 0,01 à 50 parties en poids d'un composé minéral à l'état de particules très fines, à un diamètre de particule moyen inférieur ou égal à 200 nm,

le composant F consistant en composés d'un ou plusieurs métaux du 1er au 5e groupe principal ou du 1er au 8e sous-groupe de la Classification Périodique, avec au moins un élément choisi dans le groupe consistant en l'oxygène, le soufre, le bore, le carbone, le phosphore, l'azote, l'hydrogène et le silicium, et la somme des parties en poids de A + B + C + D + E + F représentant 100 parties.

2. Matières à mouler selon la revendication 1, pour lesquelles le composant F consiste en au moins un des composés TiN, $TiO_2$, $SnO_2$, WC, ZnO, $Al_2O_3$, AlO(OH), $ZrO_2$, $Sb_2O_3$, $SiO_2$, borate de zinc, $NaSO_4$, $BaSO_4$, oxydes du vanadium, borate de zinc, silicates.

3. Matières à mouler selon une des revendications qui précèdent, pour lesquelles le diamètre de particule moyen du composant F est inférieur ou égal à 150 nm.

4. Matières à mouler selon la revendication 1, contenant 50 à 95 parties en poids d'un polycarbonate aromatique A.

5. Matières à mouler selon la revendication 1, contenant un polymère greffé C préparé par copolymérisation de

5 à 95 parties en poids d'un mélange de

50 à 95 parties en poids de styrène, d'$\alpha$-méthylstyrène, d'un styrène halogéné ou alkylé dans le noyau, d'un méthacrylate d'alkyle en $C_1$-$C_8$, d'un acrylate d'alkyle en $C_1$-$C_8$ ou d'un ménage de ces composés et

5 à 50 parties en poids d'acrylonitrile, de méthacrylonitrile, d'un méthacrylate d'alkyle en $C_1$-$C_8$, d'un acrylate d'alkyle en $C_1$-$C_8$, d'anhydride maléique, d'un maléimide substitué à l'azote par un groupe alkyle en $C_1$-$C_4$ ou phényle, ou d'un mélange de ces composés sur

5 à 95 parties en poids d'un caoutchouc ayant une température de transition du second ordre inférieure à -10°C.

**6.** Matières à mouler selon la revendication 1, pour lesquelles l'indice N de la formule (I) va de 0,3 à 2.

**7.** Matières à mouler selon la revendication 1, pour lesquelles le symbole Y de la formule (I) représente un groupe méthylène ou isopropylidène.

**8.** Matières à mouler selon la revendication 1, pour lesquelles le dérivé du phosphore répondant à la formule (I) consiste en au moins un composé choisi dans le groupe consistant en le phosphate de tributyle, le phosphate de tris-(2-chloréthyle), le phosphate de tris-(2,3-dibromo-propyle), le phosphate de triphényle, le phosphate de tricrésyle, le phosphate de diphényle et de crésyle, le phosphate de diphényle et d'octyle, le phosphate de diphényle et de 2-éthylcrésyle, le phosphate de tri-(isopropylphényle), les phosphates d'aryle substitués par des halogènes, le méthylphosphonate de diméthyle, le méthylphosphonate de diphényle, le phénylphosphonate de diéthyle, l'oxyde de triphénylphosphine, l'oxyde de tricrésylphosphine.

**9.** Matières à mouler selon les revendications 1 à 8, **caractérisées en ce qu'**elles contiennent de 0,01 à 20 % de leur poids total d'au moins un agent ignifugeant autre que le composant D.

**10.** Matières à mouler selon l'une des revendications qui précèdent, contenant en tant que support de greffage C.2 un caoutchouc diénique, un caoutchouc d'acrylate, un caoutchouc de silicone ou un caoutchouc d'éthylène-propylène-diène.

**11.** Matières à mouler selon l'une des revendications 1 à 11, contenant au moins un additif choisi dans le groupe des stabilisants, des pigments, des agents de démoulage, des produits auxiliaires fluidifiants et/ou des agents antistatiques.

**12.** Utilisation des matières à mouler selon l'une des revendications 1 à 11 pour la fabrication d'objets moulés.

**13.** Objets moulés fabriqués à partir des matières à mouler selon l'une des revendications 1 à 11.